# EUROPEAN PATENT APPLICATION

(11) **EP 1 850 278 A1**
(43) Date of publication of application: **31.10.2007**
(21) Application number: 07002856.8
(22) Date of filing: 09.02.2007
(51) Int. Cl.: G06Q 10/00, G06F 17/30, G06F 3/048

(54) **Improving portal page personalization offering a direct manipulative window arrangement functionality**

(30) Priority: 26.04.2006 US 412335
(71) Applicant: SAP AG, 69190 Walldorf (DE)
(72) Inventor: Danninger, Michael, 76829 Landau (DE)
(74) Representative: Müller-Boré & Partner Patentanwälte

(57) **Abstract**

A method, graphical user interface, system, and a computer readable medium containing instructions that when executed result in a performance of a method for displaying an enterprise portal, displaying at least one role-specific window pane in the enterprise portal, detecting a first position of a first window pane, detecting an input signal to drag-and-drop the first window pane to a second position, and displaying the first window pane in the second position.

## Description

### REFERENCE TO RELATED APPLICATION

This application is related to co-pending, commonly assigned, U.S. Patent Application Ser. No. ____ for "Improving Usability by Offering the Possibility to Change Viewing Order in a Navigation Panel," filed on the same day as this application.

### BACKGROUND

Software integration tools currently provide methods to utilize Enterprise Resource Planning (ERP) systems, which allow for the integration and automation of business practices, while providing portals to deliver content and functionality to users. Content can be displayed to a user based on the user's role in the enterprise or they can be tailored to the specific user by the portal administrator. Pre-defined portal templates can be selected for individual users by portal administrators, chosen by the users, or automatically selected due to a user's role. The portal views contain window panes that are specific to the user, typically based on that user's tasks or clearance to access certain types of content. Like the specific window panes that are pre-selected, the positioning and layout of the window panes is also pre-selected and defined for a user. Moreover, even if the location of a window pane can be changed, it requires maneuvering through various menus to later save a new layout. Moreover, if a portal administrator were to eliminate certain menus available to a role-specific template, the users of that portal would not be able to change the layout at all.

### BRIEF DESCRIPTION OF THE DRAWINGS

FIG. 1 depicts a possible configuration of a system capable of using an embodiment of the invention.

FIG. 2 depicts an example display of an role-specific enterprise portal, in particular an example employee portal.

FIG. 3 depicts an example embodiment of the example role-specific employee enterprise portal that utilizes a drag-and-drop functionality to alter the positioning of window panes in the role-specific enterprise portal.

FIG. 4 depicts the dropping action of a drag-and-drop of a window pane.

FIG. 5 depicts an example embodiment that automatically shifts the window pane horizontally and vertically to eliminate the white space in-between window panes and keeps all the white space at the bottom of the enterprise portal.

FIG. 6 depicts an example embodiment where a window pane, in this example the same employee photo pane, is dragged to overlap two other window panes in the employee portal.

FIG. 7 depicts an example embodiment where the employee role-specific enterprise portal automatically adjust to shift the window panes to eliminate overlap.

FIG. 8 depicts an alternative embodiment with horizontal drag-and-drop and automatic resizing.

FIG. 9 depicts an example embodiment where a window pane can be "hidden" if the window pane is dragged outside of the role-specific enterprise portal region.

FIG. 10 depicts an example embodiment where multiple panes can be drag-and-dropped.

FIG. 11 depicts the multiple panes dragged to overlap another pane.

FIG. 12 depicts an embodiment where the panes automatically shift panes to eliminate horizontal and vertical white space.

FIG. 13 depicts an example embodiment where the panes that are selected are not contiguous.

FIG. 14 depicts an example embodiment where the group of panes is shifted down below another pane.

FIG. 15 depicts an embodiment where the employee role-specific enterprise portal automatically eliminates the white spaces appearing between the panes.

FIG. 16 depicts an example logic that may be used to implement an embodiment of the present invention.

### DETAILED DESCRIPTION

E-business software integration tools utilize ERP back-end systems to aid in organizing business content and processes while using adaptable displays to provide user friendly and reusable front-end portals to users. The ERP functionality can aid in business activities, such as manufacturing, logistics, customer relationship management (CRM), supply chain management (SCM), inventory management, quality management, human resources management, strategic management, e-procurement, business intelligence, product lifecycle management, etc. In order to utilize the assorted back-end functionality without requiring new training for the user interfaces, enterprise portals utilize templates to provide similar layouts with a look-and-feel that users are accustomed to. These layouts derive from the same types of pre-defined templates.

The Enterprise Portals are front-end portals, which are typically for intranets but can also access internet data and may be a web-based cross-application platform that can access data and utilize processes from multiple servers, languages and technologies. Among the types of back-end systems that an enterprise portal may access are packaged applications, eBusiness XML exchanges, messaging systems, proprietary formats, application servers, legacy databases, data warehouses, relation and nonrelational databases, screen-based systems, transaction systems, 3GL and 4GL applications, etc. The display may be presented on an application but is typically a web-based display. The enterprise portal may provide various types of windows or window panes, such as a navigation panel, a main content window, or other regions containing role-specific or non-role-specific regions of a role-specific enterprise portal. The navigation portal, main content window, other regions containing role-specific or non-role-specific regions of a role-specific enterprise portal may contain window panes with embedded functionality, such as integrated views (iViews) of backend systems. The iViews may link to content data that may be displayed in the main content window or other window panes of the enterprise portal, open new windows to display new content or functionality, process business data, provide navigation links, run applications in a new window, display portal favorites, search the enterprise portal, etc. The iViews can support access to multiple types of ERP applications and databases of remote systems, as well as functionality on the previously mentioned back-end systems. Moreover, due to the nature of the enterprise portal, much of the content data may be business data.

The enterprise portal layouts and positioning of window panes are derived from templates but are tailored for a specific user or a specific role by a portal administrator. A role can be procedural, for example an executive officer versus an employee, or functional, for example a human resource manager versus a supply chain manager. The portal administrator may tailor one type of enterprise portal for various roles based on the tasks that a role performs or on the level of access to data or functions. As a further example, a manager role portal may have window panes containing content data and iViews to support budget planning and staffing monitoring, while an employee role portal may display window panes with functionality and content data to cover categories such as time management, business travel and expense management, salary management, employee review data, continuing education training, internal recruiting and job posting, management of personal information, expenses and reimbursements, etc.

An advantage of the present invention is to be able to not only provide a user with pre-defined template portals but also to allow the individual users to alter the specific appearance of the portals by drag-and-dropping window panes into alternate locations. An embodiment of the present invention may provide a method to display an enterprise portal, display at least one role-specific window pane in the enterprise portal, detect a first position of a first window pane, detect an input signal to drag-and-drop the first window pane to a second position, and display the first window pane in the second position.

An embodiment of the invention may also have a system comprising an arrangement for displaying an enterprise portal, an arrangement for displaying at least one role-specific window pane in the enterprise portal, an arrangement for detecting a first position of a first window pane, an arrangement for detecting an input signal to drag-and-drop the first window pane to a second position, and an arrangement for displaying the first window pane in the second position. The arrangement for displaying an enterprise portal, a navigation panel, and a window pane in the second position, could be an LCD display on a laptop or handheld device, a CRT or LCD monitor, a television, etc. The arrangement for detecting an input signal could be a mouse, mouse pen, trackball, keyboard, etc. that is connected to a processor in a computing device. The arrangement for detecting the positions of a window pane could be any computing device with a processor, such as a laptop, desktop, handheld device, server, etc. Reference to a role-specific window pane in an enterprise portal refers only to window panes that are within a page of an enterprise portal, in particular a role-specific portal page, which includes window panes that are specific to a role and also window panes that are available to all users on a system; however, role-specific window panes exclude any window panes that are within the enclosed region of a navigation panel. A role-specific window pane may be any window pane found within a role-specific portal, excluding those found in the navigation panel.

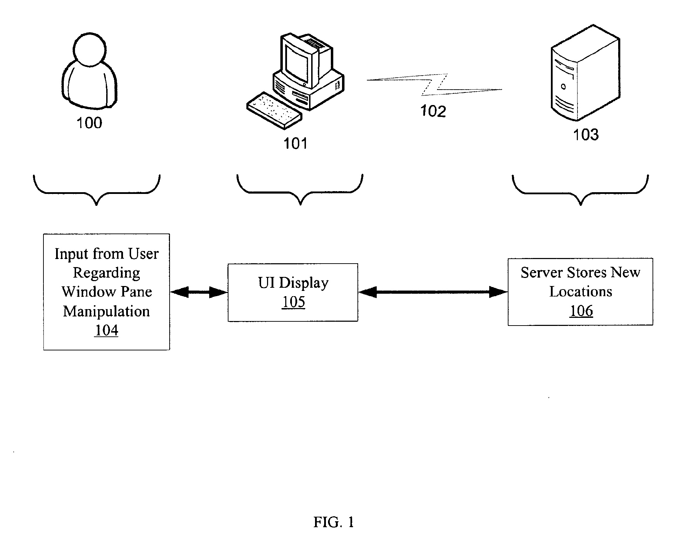

FIG. 1 depicts a possible configuration of a system capable of using an embodiment of the invention. A user 100 inputs a signal that indicates to the enterprise portal that the user is manipulating the position of a window pane 104, such as an iView. The enterprise portal user interface (UI) display 105 is presented to the user by a computing device 101. The computing device 101 takes the input 104 and the embodiment processes the user's change in location of a selected window pane or window panes and alters the user interface display to reflect the user's changes. The computing device may transmit the newly altered user interface display location to a server 103 via a communication medium 102. The server or multiple servers 103 may store the data 106 and attribute these changes either to the specific user or to the role of the specific user. The computing device 101 may be any hardware that has processing or computational capability, such as a laptop, handheld device, etc. The communication medium 102 may be either intranet or internet and over a wireless or wired communication (e.g. ethernet cable). The server 103 may hold database information or contain back-end applications, and one may distribute the functional modules or storage modules of an embodiment across one or more server computers 103 as appropriate.

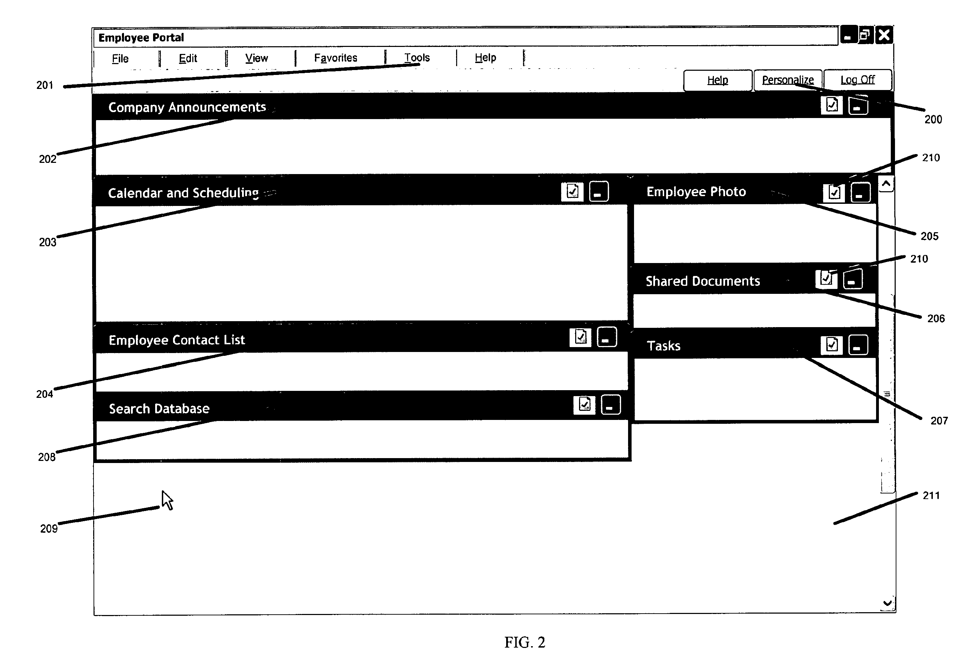

FIG. 2 depicts an example display of an role-specific enterprise portal, in particular an example employee portal. The employee portal is role-specific and contains window panes that are specific to that employee's role as well as window panes that may be available to all roles. For example, a company announcements pane 202, may display content data that is accessible to users of all roles. Many of the window panes may display content data, possibly retrieved from a back-end database or on the computing device itself. For example, an employee contact list 204 may be stored on a database server or possibly on the employee's computer in order to limit access. An employee photo pane 205, may contain the employee's photo and possibly an entire gallery. An employee shared documents pane 206 may contain documents that may be edited by the employee on the computing device and stored on a server to be shared with other employees of the same role. Other panes contain embedded functionality and are integrated views (iViews) of backend systems which can link to content data or functional applications. For example, an employee may be able to conduct complex searches for information using a search database pane 208. The employee may also be able to access applications on a server in a task pane 207. Panes can display both content data and also access applications. For example, an employee may access a calendar and scheduling pane 203 which can list important company-wide events and also to schedule and arrange the employee's personal meetings. The portal itself may also have white space 211 which could leave space to add window panes in the future.

The layout may be alterable through various menus, such as a tools menu 201, a personalize menu 200, or even a property menu 210 of individual panes, all accessible by using an input, such as a cursor 209. However, a portal administrator that creates the original employee role portal template may not allow these features to appear to the employee. Even if these options are available, the process of maneuvering through the menus to change the layout of the portal may prove unwieldy and cumbersome. A drag-and-drop feature to change the window panes and iView locations would prove to be efficient and intuitive to users.

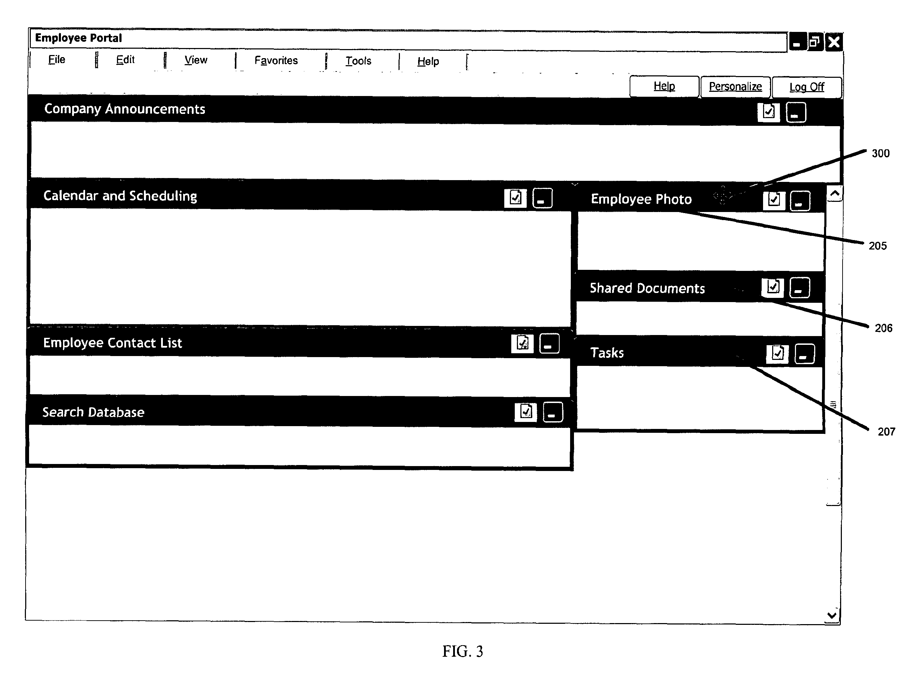

FIG. 3 depicts an example embodiment of the example role-specific employee enterprise portal that utilizes a drag-and-drop functionality to alter the positioning of window panes in the role-specific enterprise portal. The application would indicate to the user that the window pane is ready to be moved. For example, if the employee photo pane 205 was the window pane that a user wanted to move, the user could position the cursor over the window pane. When the cursor is in a position that could move the window pane the portal could provide an indicia, such as having the cursor change its appearance to that of a crosshair 300. Alternatively, the window pane could be highlighted. The user could proceed to drag the window pane around the role-specific enterprise portal.

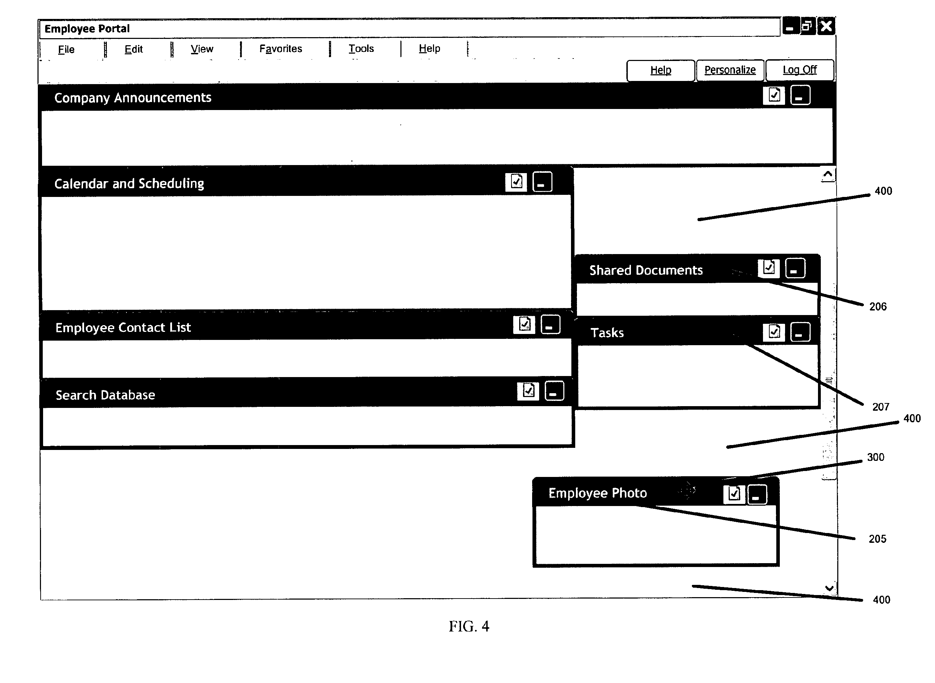

FIG. 4 depicts the dropping action of a drag-and-drop of a window pane. The enterprise portal would register the new location of the window pane, in this case the employee photo pane 205, when the user deselects the pane. The positioning of the pane would follow the cursor (in this case a cross-hair) 300 position. In some embodiments of the enterprise portal, and as shown in the figure the position of the pane may stay exactly where the user left the pane thus leaving a significant amount of white space 400 in-between window panes. However, in other embodiments, the pane may automatically shift horizontally and vertically so that it is aligned with other window panes.

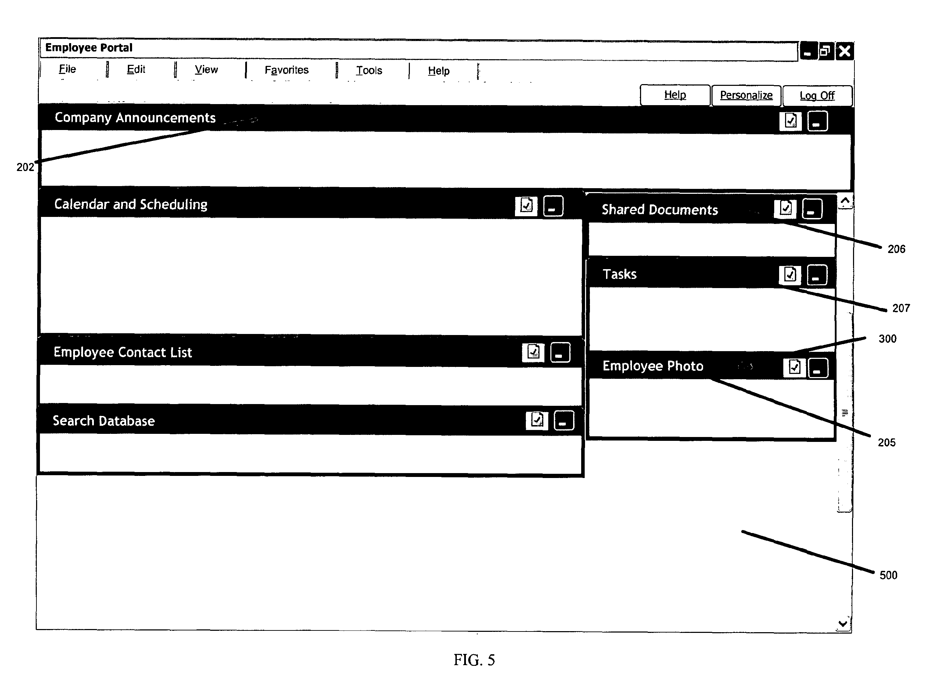

Alternatively, FIG. 5 depicts an example embodiment that automatically shifts the window pane horizontally and vertically to eliminate the white space in-between window panes and keeps all the white space 500 at the bottom of the enterprise portal. The figure depicts that the other panes in the right column region 206 and 207 are shifted up to eliminate white space under the company announcements pane 202. The employee photo pane 205 then shifts right horizontally to align itself with the tasks pane 207 and the shared documents pane 206 column. The employee photo pane 205 also shifts up vertically to eliminate the white space under the tasks pane 207.

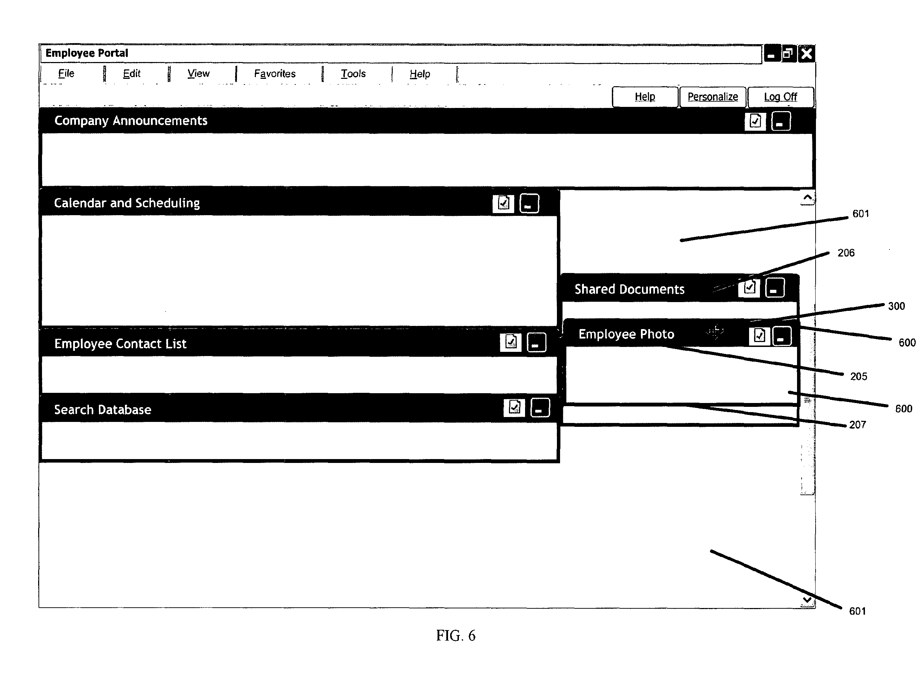

FIG. 6 depicts an example embodiment where a window pane, in this example the same employee photo pane 205, is dragged to overlap 600 two other window panes 206 and 207 in the employee portal. However, once again there is a significant amount of white space 601 created, and the overlapping makes it difficult to access other panes.

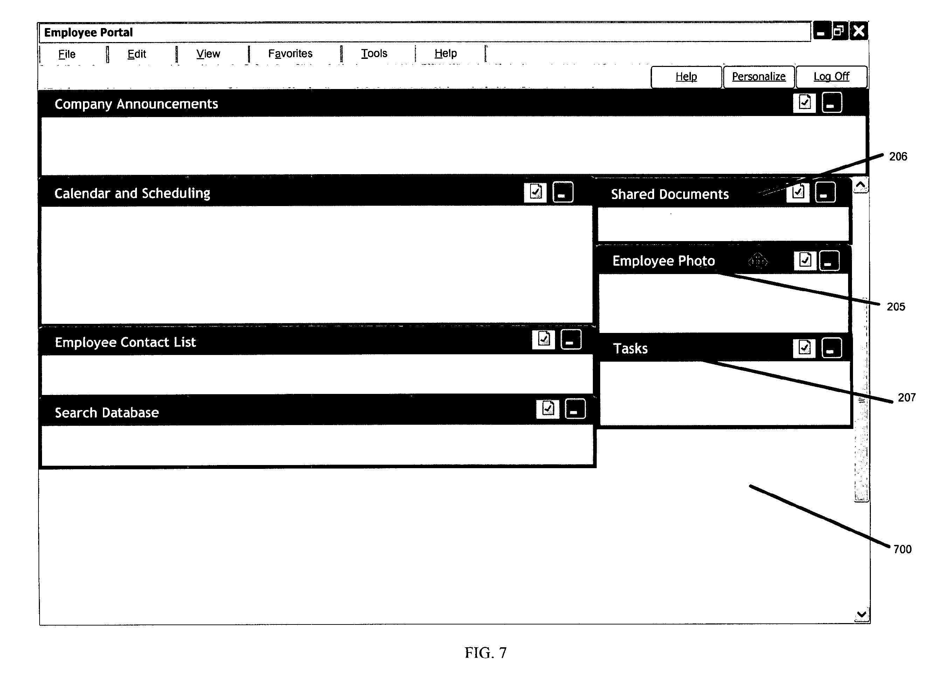

FIG. 7 depicts an example embodiment where the employee role-specific enterprise portal automatically adjust to shift the window panes 206 and 207 to eliminate overlap. The example embodiment of the enterprise portal would detect the location where the drag-and-dropped window pane was dropped. If the window pane is dropped between two other panes, as the employee photo pane 205 is in the figure, the other panes would be shifted to eliminate the overlap. In the figure the shared documents pane 206 and search pane 202 would be shifted up and the services pane 201 would be shifted down to make room for the portal favorites pane 203. The white space 700 would once again occupy the bottom of the employee portal.

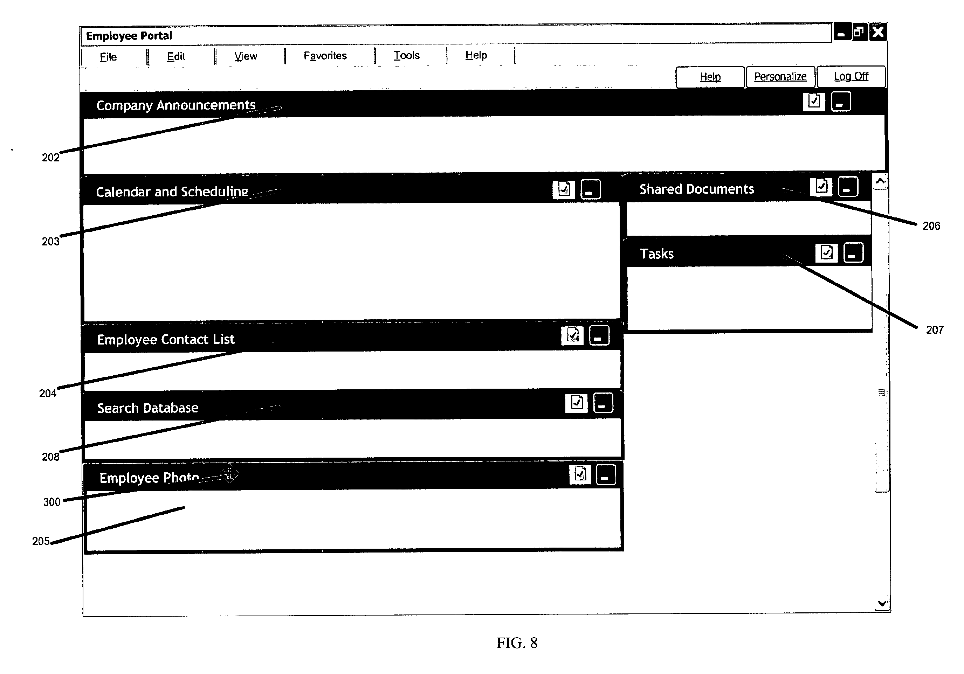

FIG. 8 depicts an alternative embodiment with horizontal drag-and-drop and automatic resizing. Alternative embodiments of the drag-and-drop windows may also allow for automatic resizing to match column width of surrounding window panes. For example, the employee portal in FIG. 3 contains several discernable regions, a top portion and a left and right column beneath. If a right column pane, such employee photo pane 205, were to be moved by a cursor 300 over to the right column, not only would the window panes shift to eliminate white space, but also to align with the left column the window pane may also resize the window to match the width of the left-bottom column. FIG. 8 depicts the window pane 205 that is resized after it has moved horizontally to match with the width of another pane. The employee photo pane 205 that was previously narrow, widens in the left-bottom column to match the width of the closest window panes 203, 204, and 208 in the same column. In alternative embodiments, if there is no set column width between columns, the resize may not be automatic. Moreover, the panes 205 and 207 are left in the right-bottom column adjust by shifting to eliminate the white space left by the employee photo pane 205.

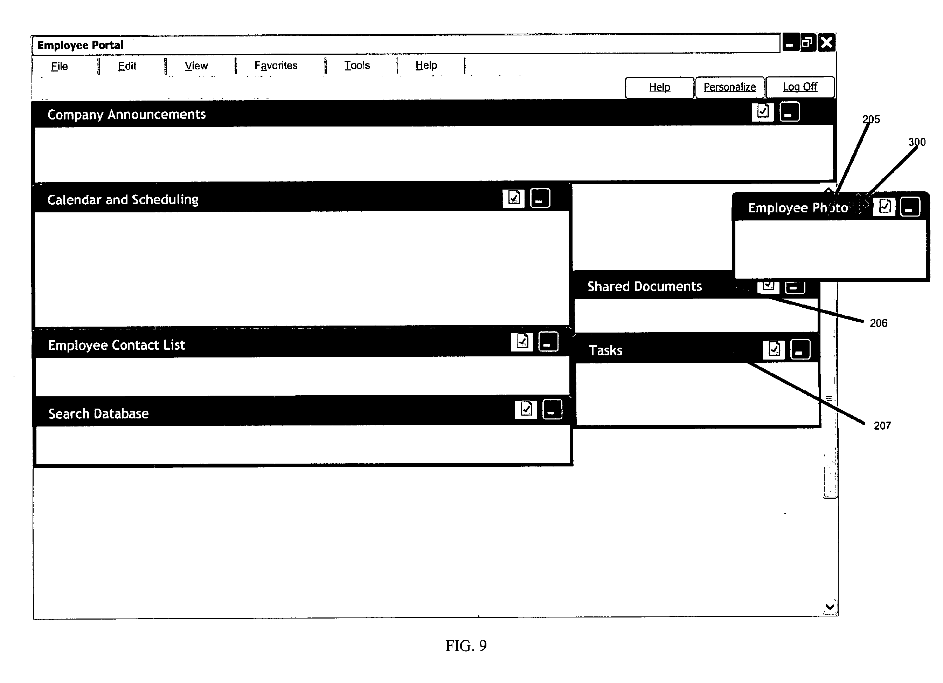

FIG. 9 depicts an example embodiment where a window pane can be "hidden" if the window pane is dragged outside of the role-specific enterprise portal region. The example embodiment detects that a significant portion of the employee photo pane 205 is outside of the role-specific enterprise portal. Alternatively, the embodiment could detect that the crosshair 300 is outside of the portal to indicate that a window pane should be hidden. When the portal detects that a user moves a pane to be hidden, the portal favorites pane 203 disappears from the role-specific enterprise portal and is "hidden" until it is re-selected to be viewed by user in a menu.

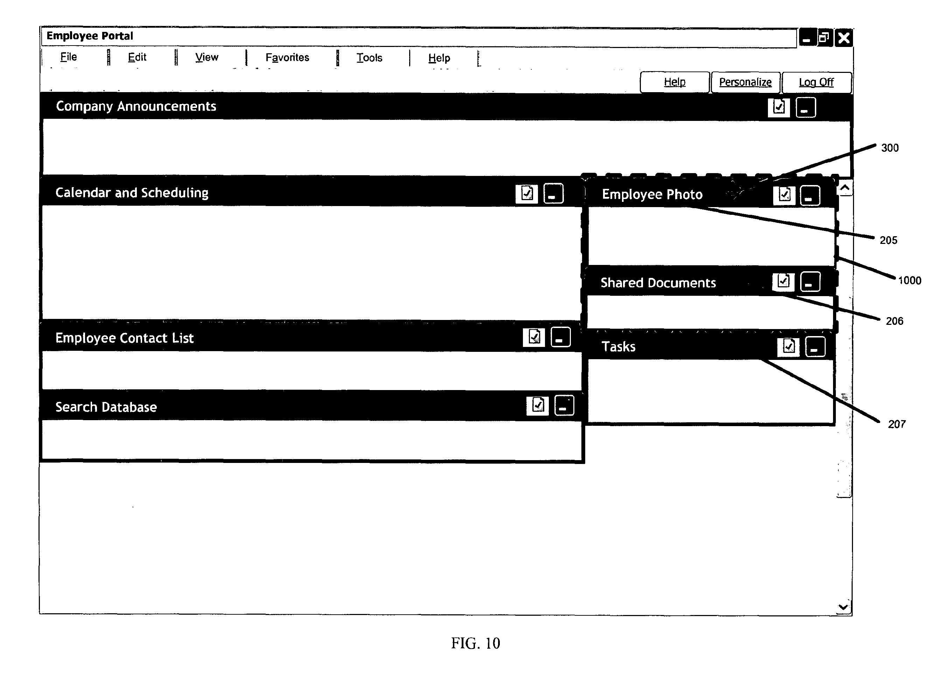

FIG. 10 depicts an example embodiment where multiple panes can be drag-and-dropped. Multiple panes may be selected by various methods, such as by holding the "control" button, by dragging the cursor and selecting multiple panes, etc. When multiple panes are selected, the group 1000 of panes can be drag-and-dropped, acting like a single pane, and moved around the role-specific enterprise portal.

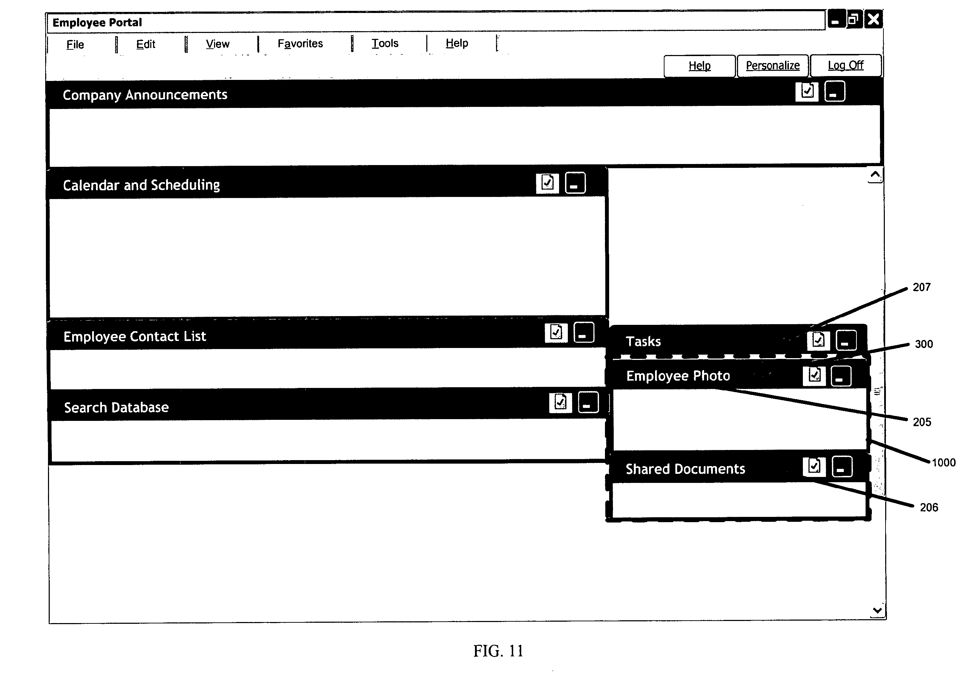

FIG. 11 depicts the multiple panes dragged to overlap another pane. In this example, the group acts as a single pane and the new location for the group may be determined where the cursor is released.

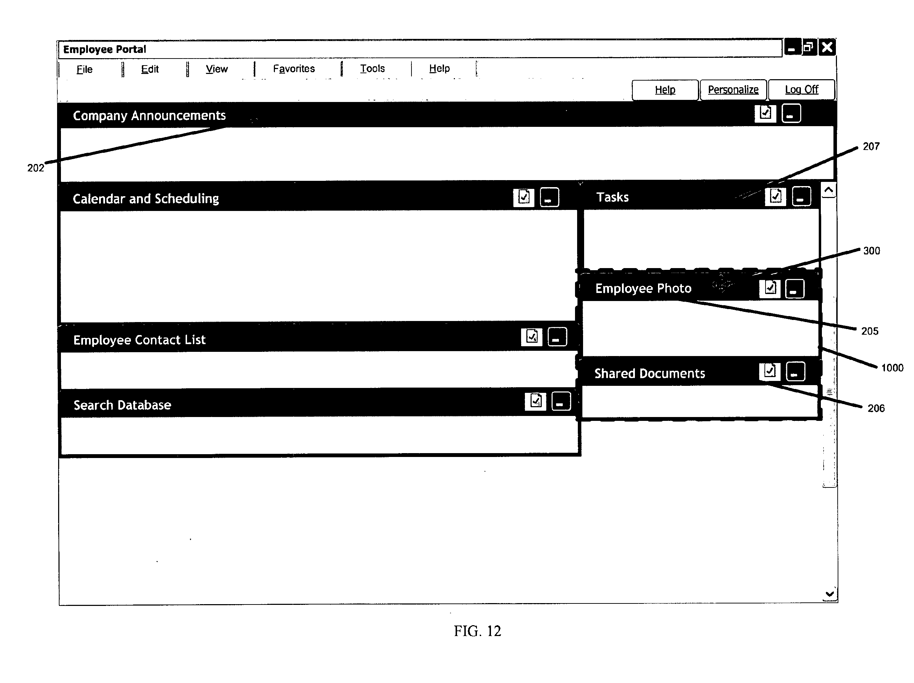

FIG. 12 depicts an embodiment where the panes automatically shift panes to eliminate horizontal and vertical white space. In this example, because the group had exceeded the top of the tasks pane 207 in FIG. 11, the tasks pane 207 is shifted up under the company announcements pane 202 and the group of panes 1000 is shifted to eliminate the white space between the group of panes and the tasks pane 207. Note that the order of the panes is kept in the same order that was originally grouped, with the portal employee photo 205 directly above the shared documents pane 206. In an alternative embodiment, if control click is used to select multiple panes that are not contiguous, the order of the panes may be kept the same but the panes may still be shifted to eliminate white space.

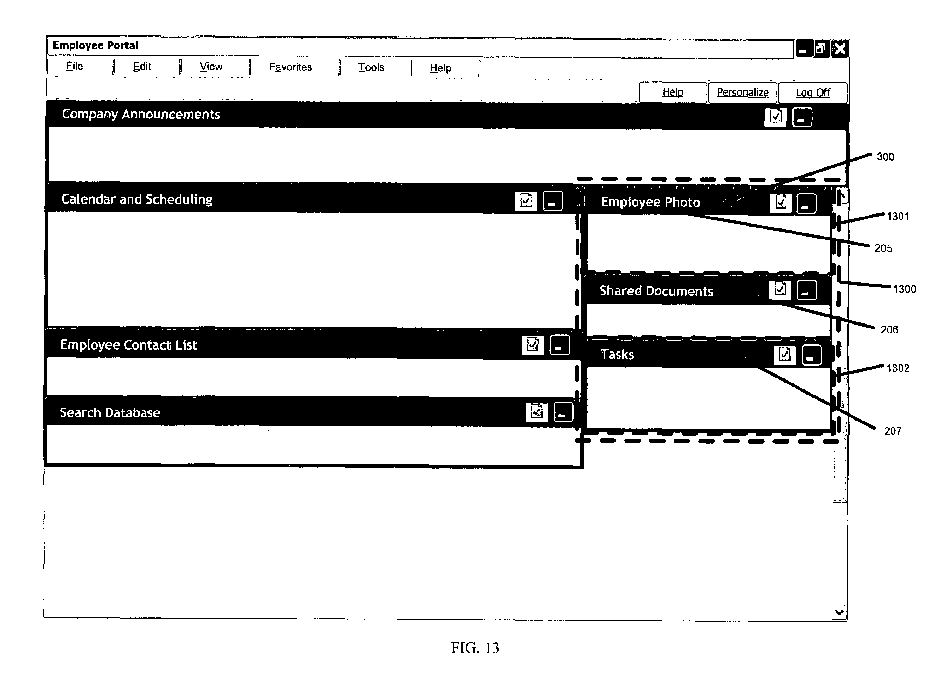

FIG. 13 depicts an example embodiment where the panes that are selected are not contiguous. The group of panes 1300 highlights the two panes that are selected 1301 and 1302 by highlighting the panes within the large group highlight 1300 that are selected, 205 and 207, respectively. Again the group of panes 1300 is dragged as a group.

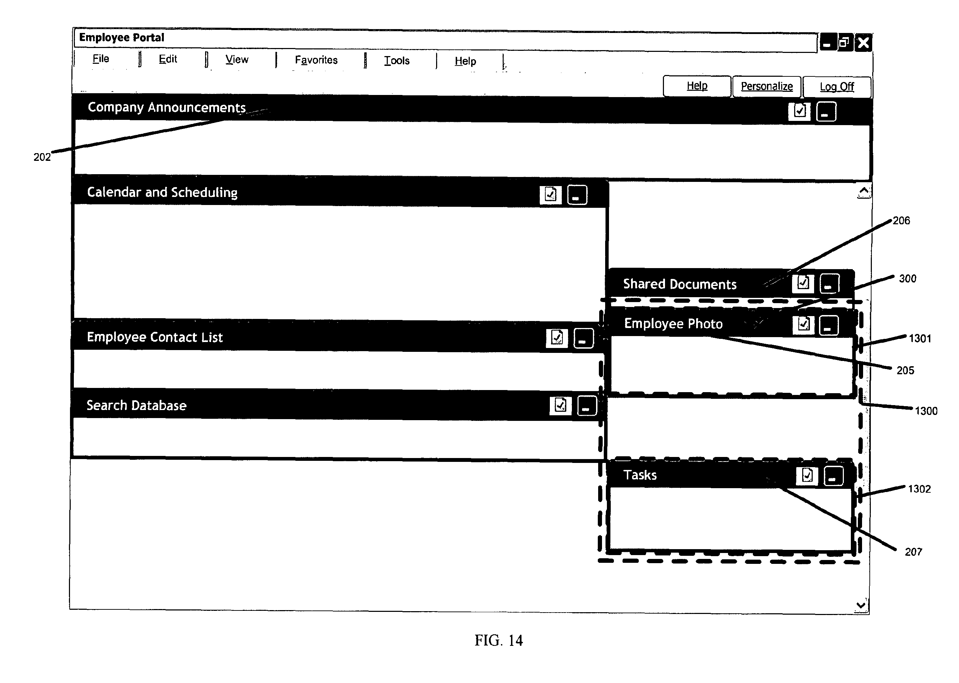

FIG. 14 depicts an example embodiment where the group of panes is shifted down below another pane. While dragged, the appearance remains the same, with a space in-between panes 205 and 207.

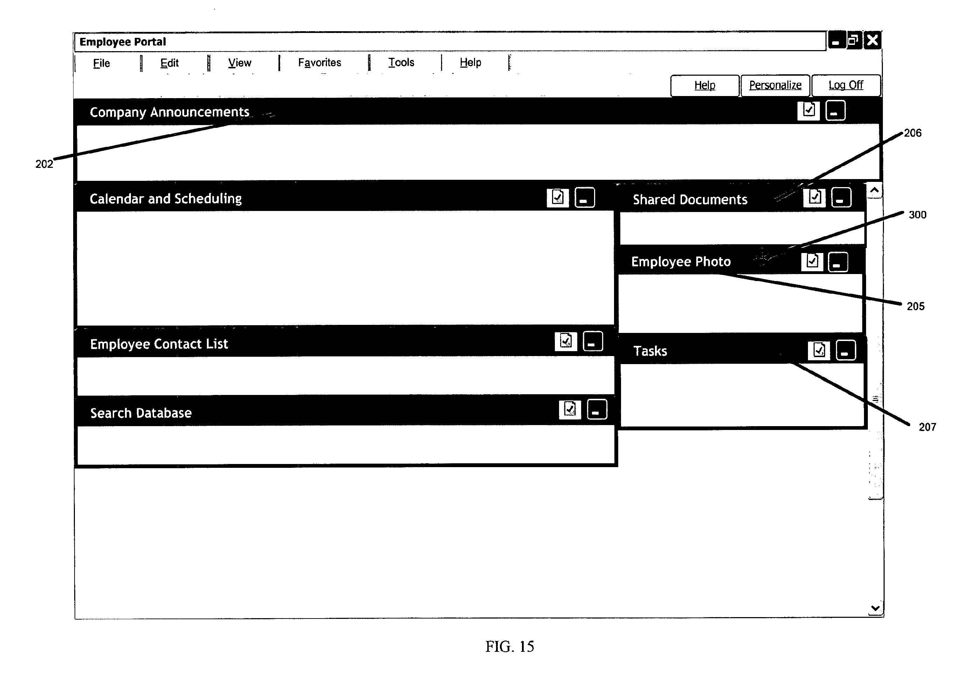

FIG. 15 depicts an embodiment where the employee role-specific enterprise portal automatically eliminates the white spaces appearing between the panes. Like in FIG. 12, the order of the panes is kept the same with pane 205 above that of pane 207; however, the white space between panes 206 and 202 are eliminated, just like the white space between that of panes 205 and 207.

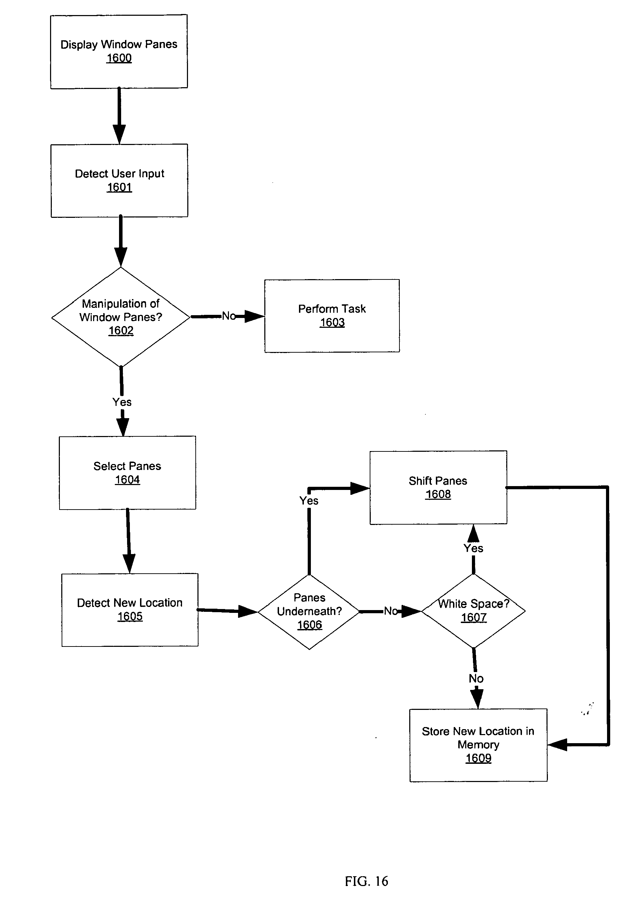

FIG. 16 depicts an example logic that may be used to implement an embodiment of the present invention. An enterprise portal displays all of the window panes 1600 in the role-specific enterprise portal. The enterprise portal awaits a user input 1601. If a user input is detected, the embodiment must determine whether it is an input to manipulate the window pane locations 1602 or to perform an alternate enterprise portal task, such as an embedded functionality task within a window pane. If the input is to perform a task in a window pane, then the task is performed 1603. If the input is to manipulate the location of the window pane then the input first determines the panes that are selected 1604, either singular or multiple, and also determines the structure and ordering of the panes within the group of panes. The user drag-and-drops the pane or group of panes and when the user decides on a new location, the new location of the panes is determined 1605. In some embodiments that eliminate white space or overlap, the embodiment determines if there are panes underneath the moved panes 1606. If there are panes underneath, the panes underneath are shifted 1608 and the new locations of all the panes are stored 1609. Otherwise, the enterprise portal detects whether there is excess white space 1607. If there is excess white space the panes are shifted 1608 and the new locations of all the panes are stored 1609. When the locations are stored, they can be stored either for that particular user or for the specific role that represents the user's position.

Several embodiments of the present invention are specifically illustrated and described herein. However, it will be appreciated that modifications and variations of the present invention are covered by the above teachings and within the purview of the appended claims without departing from the spirit and intended scope of the invention.

## Claims

1. A method comprising:
displaying an enterprise portal;
displaying at least one role-specific window pane in the enterprise portal;
detecting a first position of a first window pane;
detecting an input signal to drag-and-drop the first window pane to a second position; and
displaying the first window pane in the second position.

2. A method according to claim 1, wherein the window pane:
is an iView,, and/or
displays data content, preferably comprising business data, and/or
contains an embedded functionality, which preferably processes business data, provides navigation links, is links to run applications in a new window, displayes portal favorites, and/or searches the enterprise portal.

3. A method according to one of the preceding claims, further comprising selecting multiple window panes.

4. A method according to one of the preceding claims, further comprising detecting an input signal to drag-and-drop the multiple window panes to a second position.

5. A method according to one of the preceding claims, further comprising hiding the window pane where the second position is outside the display of the enterprise portal.

6. A method according to one of the preceding claims, further comprising shifting window panes that overlap with the second position of the first window pane.

7. A method according to one of the preceding claims, further comprising shifting the first window pane in the second position to a third position to close out white space.

8. A method according to one of the preceding claims, further comprising automatically resizing a first window pane to match a second window pane.

9. A method according to one of the preceding claims, wherein the second position is located substantially horizontal away from the first position.

10. A method according to one of the preceding claims, further comprising storing into memory the locations of the window panes in the role-specific enterprise portal, wherein the stored locations in memory preferably are attributed to a specific userand/or to a specific role.

11. A graphical user interface for display on a display unit of a processor-based device, comprising:
a role-specific portal of an enterprise portal having at least one role-specific window pane having a first position, wherein the at least one window pane can undergo a drag-and-drop movement from the first position to a second position in the display unit.

12. A graphical user interface according to claim 11, wherein the window pane:
is an iView,
displays data content, wherein the data content preferably is business data, and/or
contains an embedded functionality, which preferably processes business data, provides navigation links, is links to run applications in a new window, displays portal favorites, and/or searches the enterprise portal.

13. A graphical user interface according to claim 11 or 12, further comprising an input to select multiple window panes.

14. A graphical user interface according to claim 13, further comprising an input to drag-and-drop the multiple window panes to a second position.

15. A graphical user interface according to one of the preceding claims 12 to 14, wherein window panes are hidden on where the second position is outside the display of the enterprise portal.

16. A graphical user interface according to one of the preceding claims 12 to 15, wherein window panes that overlap with the second position of the first window pane are shifted.

17. A graphical user interface according to one of the preceding claims 12 to 16, wherein the first window pane is shifted from the second position to a third position to close out white space.

18. A graphical user interface according to one of the preceding claims 12 to 17, wherein the first window pane is automatically resized to match a second window pane.

19. A graphical user interface according to one of the preceding claims 12 to 18, wherein the second position is located substantially horizontal away from the first position.

20. A graphical user interface according to one of the preceding claims 12 to 19, further comprising a memory to store the locations of the window panes in the navigation panel, wherein the stored locations in memory preferably are attributed to a specific user and/or to a specific role.

21. A computer readable medium containing instructions that when executed result in a performance of a method comprising:
displaying an enterprise portal;
displaying at least one role-specific window pane in the enterprise portal;
detecting a first position of a first window pane;
detecting an input signal to drag-and-drop the first window pane to a second position; and
displaying the first window pane in the second position.

22. A system comprising:
an arrangement for displaying an enterprise portal;
an arrangement for displaying at least one role-specific window pane in the enterprise portal;
an arrangement for detecting a first position of a first window pane;
an arrangement for detecting an input signal to drag-and-drop the first window pane to a second position; and
an arrangement for displaying the first window pane in the second position.
